# EUROPEAN PATENT SPECIFICATION

(11) **EP 3 517 337 B1**
(45) Date of publication and mention of the grant of the patent: **20.09.2023**
(21) Application number: 18153482.7
(22) Date of filing: 25.01.2018
(51) Int. Cl.: B60K 26/00, B62D 23/00, H02M 7/00

(54) **FRAMEWORK FOR AUTOMATED VEHICLES**
RAHMENWERK FÜR AUTOMATISIERTE FAHRZEUGE
CADRE POUR LES VÉHICULES AUTOMATISÉS

(43) Date of publication of application: 31.07.2019
(73) Proprietor: Emm! solutions GmbH, 71263 Weil der Stadt (DE)
(72) Inventor: Müller, Armin, 71263 Weil der Stadt (DE)
(74) Representative: Meyer zu Bexten, Elmar

(56) References cited:
- WO-A2-03/049964
- DE-A1-102011 053 254
- US-A1- 2008 017 426
- US-A1- 2017 182 924
- US-A1- 2017 305 253

## Description

### Technical Field

The invention relates to the product as per the first portion Claim 1.

### Background Art

The advancement of functions, software, sensors, and connectivity render the use of automated vehicles more and more implementable. A driving force of this evolution is the transportation of goods and passengers. As per the state of the art, both applications typically require a human driver, which is - at the least - expensive or, such as for the physically challenged or in secluded areas, plainly impossible. An exemplary impact assessment is presented in MAKRIDIS, Michail, et al. Assessing the Impact of Connected and Automated Vehicles. A Freeway Scenario. Advanced Microsystems for Automotive Applications 2017. Lecture Notes in Mobility. 2018, p.213-225.

DE 102011053254 A (PORSCHE AG) 07.03.2013 discloses a modular system having a base unit which comprises a frame, a chassis, a drive device and steering brake. A structure combinable with the base unit comprises either a sport version, a sedan version, or a wagon version. The base unit is partially planked or is disguised. The drive device comprises a fluid motor or two vehicle wheels which drive shaft hub motors.

WO03049964 discloses a chassis having systems responsive to a nonmechanical control signals and a simplified body-attachment interface includes pressembled modules to enhance ease and simplicity of chassis assembly.The chassis preferably configured to minimize the possibility of a preassembled module being incorrectly positioned within the chassis. Methods for advantageously employing preassembled modules to assemble vehicle chassis are also provided.

### Summary of invention

The invention as claimed is hereinafter disclosed in such a way that the technical problem with which it deals can be appreciated and the solution can be understood.

### Technical Problem

Prior-art automated vehicles are characterized by their complexity. This complexity proves an impediment to functional safety, official approval and homologation for road service, economic production, operation on special sites, and an efficient allocation of volumes to suppliers.

### Solution to Problem

The problem is solved by a selective modularization of the vehicle. For this purpose, the vehicle is divided into the modules or subassemblies as per Claim 1.

### Advantageous effect of invention

The nature of the assembly of the entire vehicle using connecting members allows for a flexible use for transportation of passengers and goods with the least possible interfaces. This is a significant advantage in terms of low downtime and high availability of the vehicle.

The modules can be standardized as far as possible and reused for different vehicle types without modification. This results in economic benefits and a broader coverage of the functions.

By independently supplying each module with energy, the energy system can be tailored to the power, capacity, reliability, and emergency characteristics specifically required by the desired application and type of vehicle. The charging function is provided centrally by the platform while safety functions are integrated in the respective module. In an emergency, each module can temporarily supply the other modules according to a given supply logic.

The outlined modularization allows each module to be developed, tested, and evaluated by itself. These capabilities in turn contribute significantly to the reliability and facilitate approval of the resulting vehicle.

Each module has clear interfaces regarding data, energy supply, and mechanics. Those interfaces can be parameterized in view of the application at hand. As a result, the modules can be flexibly combined and used across a broad operating range.

Furthermore, each module may be obtained in its entirety from a single supplier, which greatly reduces the complexity of vehicle construction.

Provided that downwards compatibility of the interfaces is maintained, independent further development of modules and their continuous use become feasible options.

Through this modularization, different solutions can be developed dispersedly for their respective purpose by providing the body and transport drive management modules by themselves. This approach is particularly advantageous for research institutions, as it allows them to research and develop without the need to build an entire vehicle.

The transport drive management module connects the vehicle to the environment through communication, gathering status information from the remaining modules and, in addition to managing operations, transmits them to the environment for maintenance, service, and operational planning. There, the pertinent data are analyzed and measures for optimal use are decided upon. If necessary, individual modules are replaced.

Functional interaction of the modules and their communication with the environment allow the vehicle to be integrated into an operations system controlled by a coordination center. This integration may be standardized and is safeguarded by the drive management module on behalf of the remaining modules and thus the entire vehicle.

### Brief description of drawings

Figure 1 shows a platform.
Figure 2 shows a drive-by-wire module integrated into the platform.
Figure 3 shows an integrated but removable transport drive management module with communications and sensors attached.
Figure 4 shows a body upon complete integration of the modules, including communication elements on the roof, sensors under the mirrors in the taillights, on the side, and in front.
Figure 5 describes the modularization approach as per the present invention.

### Description of embodiments

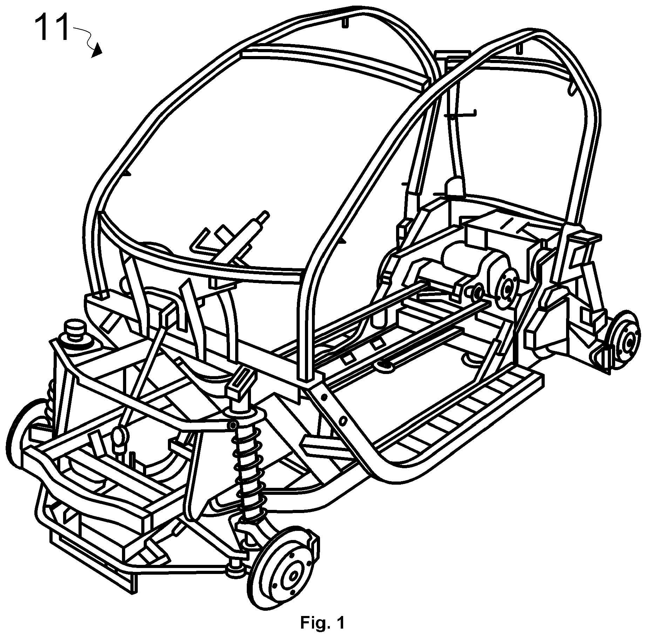

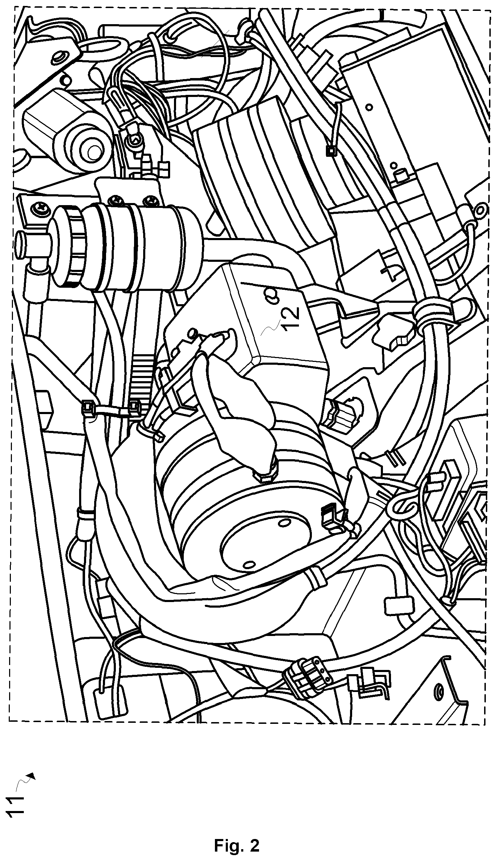

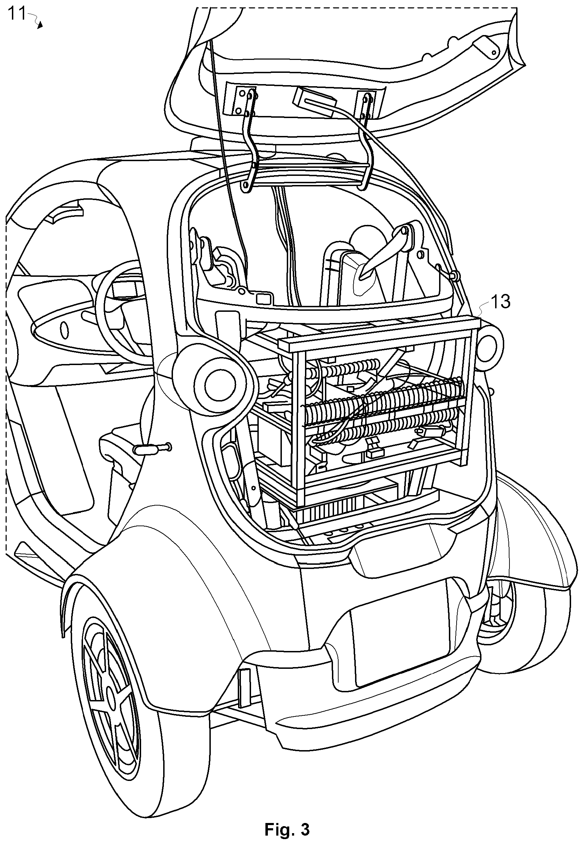

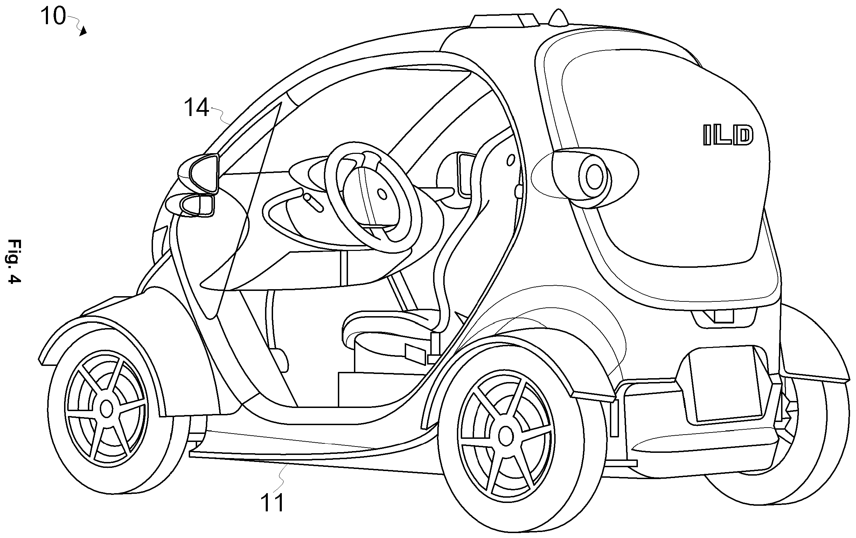

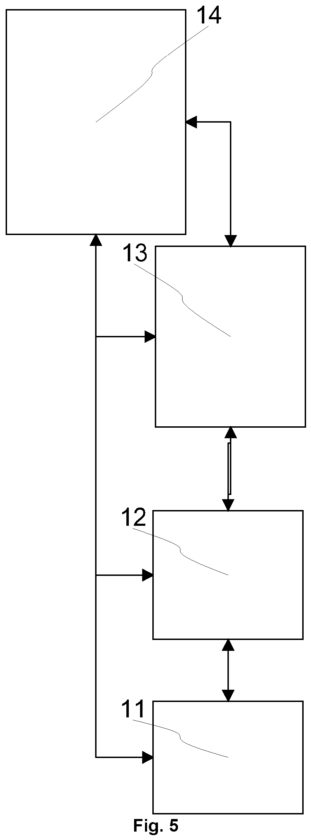

As illustrated in Figure 5, a vehicle (10 - Figure 4) is divided into four modules: a common platform (11 - Figure 1), drive-by-wire module (12 - Figure 2), transport drive management module (13 - Figure 3), and body (14 - Figure 4).

The platform (11) features its own energy supply, energy-charging emergency system, interface to drive-by-wire (12), transport drive management (13), and body (14) modules, rolling chassis, wheel guides, suspension, steering box assembly, brakes, and drivetrain.

The drive-by-wire module (12) features its own energy supply, interface to platform (11), transport drive management module (13), and body (14), actuators and signaling equipment such as headlights, turn signals, and brake lights if included in the platform (11), actuators in the wheel guides, steering box assembly, brakes, and drivetrain, sensors for motion and status acquisition, and an emergency system for deactivating the drive-by-wire function.

The transport drive management module (13) features its own energy supply, interface to the platform (11), drive-by-wire module (12), body (14), and externals, at least one central computer unit for central coordination, acquisition of all information, computation of a trajectory and its execution through the drive-by-wire module (12), management of the transportation by the body (14), safety functions, overall status of the system regarding operation and health, remote-controlled vehicle guidance, and central sensors for status acquisition.

The body (14), serving as what may be considered the actual " transportation container", features its own energy supply, interface to the platform (11), drive-by-wire (12) - for emergency functions only -, and transport drive management (13) modules, transportation functions for passengers or goods, doors, hatches and the corresponding actuators, sensors for environmental detection as well as for motion detection of the body (14), antennas for external signal acquisition, air conditioner, and an emergency system for deactivating the triggering of connecting elements and doors.

Advantageously, these modules can be independently developed, tested, and approved.

As a first option, the platform (11) and drive-by-wire module (12) - on the one hand - as well as transport drive management (13) and body (14) - on the other hand - may each be combined into a pre-packaged unit. The entire vehicle (10) may then be assembled from both units.

Using the electrical interfaces to the drive-by-wire module (12), the energy-charging emergency system, and the mechanical interfaces to the connecting elements, the two units can thus be disaggregated and tested, maintained, and used independently of one another.

This combination is particularly advantageous where the sensors internal and external to the vehicle must provide their optimal function and, to ease assembly, simple and minimal interfaces are available and usage scenarios with varying bodies - such as for the selective transportation of passengers and goods - are envisaged.

As a second option, the platform (11) and drive-by-wire module (12) form a first unit and the transport drive management module (13) forms a second. The final assembly of both units yields the overall vehicle (10).

Here as well, using the electrical interfaces to the drive-by-wire module (12), the energy-charging emergency system, and the mechanical interfaces to the connecting elements, the two units can thus be disaggregated and tested, maintained, and used independently of one another.

This combination is particularly advantageous where the sensors internal and external to the vehicle can be integrated into the platform with sufficient functionality and, again, usage scenarios with varying bodies - such as for the selective transportation of passengers and goods - are envisaged.

As a third option, the platform (11), drive-by-wire module (12), transport drive management module (13), and body (14) form a single unit. The electrical and mechanical interfaces are then established during assembly of the unit.

This combination is particularly advantageous where no variable use cases are envisaged.

### Industrial applicability

The invention is applicable, inter alia, throughout the automotive industry.

### Reference signs list

- 10: Vehicle
- 11: Platform, chassis
- 12: Drive-by-wire module
- 13: Transport drive management module
- 14: Body

### Citation list

The following documents are cited hereinbefore.

### Patent literature

DE 102011053254 A (PORSCHE AG) 07.03.2013

### Non-patent literature

MAKRIDIS, Michail, et al. Assessing the Impact of Connected and Automated Vehicles. A Freeway Scenario. Advanced Microsystems for Automotive Applications 2017. Lecture Notes in Mobility. 2018, p.213-225.

## Claims

1. Modular automated vehicle (10) featuring a rolling chassis (11), having
a drive-by-wire module (12) and a transport drive management module (13), each integrated into the chassis (11),
a body (14) mounted to and comprising sensors, controls, indicators, signaling equipment, and members connecting the chassis (11), and
a data bus interfacing the chassis (11), modules (12, 13), and body (14), **characterized in that**
the drive-by-wire module (12) and transport drive management module (13) each have an internal power supply,
the chassis (11), drive-by-wire module (12), and body (14) have a further electrical interface,
the chassis (11) is adapted to exert mechanical forces and convert electrical signals received from the drive-by-wire module (12), mount the body (14) by means of the connecting members, and furnish the transport drive management module (13) with status information,
the drive-by-wire module (12) comprises actuators mechanically integrated into the chassis (11) and is adapted to, under control by the transport drive management module (13) via the data bus, control, such as by braking, steering, suspending, or propelling, the chassis (11) via the actuators, forces, and electrical signals, actuate the connecting members, and control signaling within the chassis (11), and
the transport drive management module (13) is adapted to acquire external information, such as about a type of the body (14), acquire internal information, such as about a driving condition, operating status, energy supply, or occupants of the vehicle (10), acquire a driving task,
compute a trajectory fulfilling the driving task,
manage the controls, indicators, and signaling equipment,
control, via the data bus, the drive-by-wire module (12), such that the vehicle (10) is guided along the trajectory, and the body (14), more particularly the controls, indicators, doors, hatches, and air conditioning, and
report the status internally and externally of the vehicle (10).

2. Vehicle (10) as per Claim 1
wherein
the body (14) has an internal power supply.

3. Vehicle (10) as per Claim 1 or Claim 2
wherein
the bodywork is adapted to
transport passengers or goods,
sustain the air conditioning,
communicate with the passengers or goods being transported,
integrate the sensors, controls, and indicators into the transport drive management module (13),
under control by the transport drive management module (13), perform the signaling by actuating the doors, hatches, and air conditioning, and
control the connecting members.

4. Process for the manufacture of a vehicle (10) as per any of the preceding claims,
**characterized in**
assembling the vehicle (10) from a preassembled first package and a preassembled second package.

5. Process as per Claim 4,
**characterized in**
preassembling the chassis (11) and drive-by-wire module (12) into the first package and
preassembling the transport drive management module (13) and body (14) into the second package.

6. Process as per Claim 4,
**characterized in**
preassembling the chassis (11) into the first package and
preassembling the modules (12, 13) into the second package.

7. Process as per Claim 5 or Claim 6
wherein
each of the packages is tested, maintained, and deployed separately.

## Patentansprüche

1. Mit einem rollenden Chassis (11) ausgestattetes automatisiertes
Fahrzeug (10) mit
einem Drive-by-wire-Modul (12) und einem Transportantriebsmanagementmodul (13), die jeweils ins Chassis (11) integriert sind,
einem Aufbau (14), der am Chassis (11) montiert ist und Sensoren, Steuerungen, Anzeigen, Signalgeber und Verbindungsglieder zum Chassis (11) umfasst, und einem Datenbus, der eine Schnittstelle zwischen Chassis (11), Modulen (12, 13) und Aufbau (14) bildet,
**dadurch gekennzeichnet, dass**
das Drive-by-Wire-Modul (12) und Transportantriebsmanagementmodul (13) jeweils über eine interne Stromversorgung verfügen,
das Chassis (11), das Drive-by-Wire-Modul (12) und der Aufbau (14) eine weitere elektrische Schnittstelle aufweisen,
das Chassis (11) geeignet ist, mechanische Kräfte auszuüben und vom Drive-by-Wire-Modul (12) empfangene elektrische Signale umzuwandeln, den Aufbau (14) mittels der Verbindungsglieder zu lagern und das Transportantriebsmanagementmodul (13) mit Zustandsinformationen zu versorgen, das Drive-by-Wire-Modul (12) mechanisch ins Chassis (11) integrierte Stellglieder umfasst und geeignet ist, unter Kontrolle des Transportantriebsmanagementmoduls (13) über den Datenbus das Chassis (11) beispielsweise durch Bremsung, Lenkung, Aufhängung oder Antrieb über die Stellglieder, Kräfte und elektrischen Signale zu steuern, die Verbindungsglieder zu betätigen und die Signalübertragung innerhalb des Chassis (11) zu steuern, und das Transportantriebsmanagementmodul (13) geeignet ist, externe Informationen, beispielsweise zum Typ des Aufbaus (14), interne Informationen, beispielsweise zu Fahrzustand, Betriebszustand, Energieversorgung oder Insassen des Fahrzeugs (10), und eine Fahraufgabe zu erfassen,
eine Bewegungsbahn zu berechnen, die die Fahraufgabe erfüllt,
die Bedienelemente, Anzeigen und Signalgeber zu verwalten,
über den Datenbus den Aufbau (14), insbesondere die Bedienelemente, Anzeigen, Türen, Klappen und Klimaanlage, sowie das Drive-by-Wire-Modul (12) zu steuern, sodass das Fahrzeug (10) entlang der Bewegungsbahn geführt wird, und
den Zustand des Fahrzeugs (10) intern und extern zu melden.

2. Fahrzeug (10) nach Anspruch 1,
wobei
der Aufbau (14) eine interne Stromversorgung aufweist.

3. Fahrzeug (10) nach Anspruch 1 oder 2,
wobei
der Aufbau (14) geeignet ist, um
Personen oder Güter zu befördern,
die Klimaanlage zu tragen,
mit den beförderten Personen oder Gütern zu kommunizieren,
die Sensoren, Bedienelemente und Anzeigen ins Transportantriebsmanagementmodul (13) zu integrieren,
unter Kontrolle des Transportantriebsmanagementmoduls (13) die Signalübertragung durch Betätigung der Türen, Klappen und Klimaanlage zu bewirken und
die Verbindungsglieder zu steuern.

4. Verfahren zur Herstellung eines Fahrzeugs (10) nach einem der vorhergehenden Ansprüche,
**gekennzeichnet durch**
Zusammensetzen des Fahrzeugs (10) aus einer vormontierten ersten und einer vormontierten zweiten Einheit.

5. Verfahren nach Anspruch 4,
**gekennzeichnet durch**
Vormontage von Chassis (11) und Drive-by-Wire-Modul (12) zum ersten Element und
Vormontage von Transportantriebsmanagementmodul (13) und Aufbau (14) zum zweiten Element.

6. Verfahren nach Anspruch 4,
**gekennzeichnet durch**
Vormontage des Chassis (11) zum ersten Element und
Vormontage der Module (12, 13) zum zweiten Element.

7. Verfahren nach Anspruch 5 oder 6,
wobei
jedes der Elemente getrennt geprüft, gewartet und in Betrieb genommen wird.

## Revendications

1. Véhicule automatisé modulaire (10) comportant un châssis roulant (11)
avec
un module de commande électronique (12) et un module de gestion de l'entraînement du transport (13), chacun intégré au châssis (11),
une coque (14) montée sur le châssis (11) et comprenant des capteurs, des commandes, des indicateurs, des équipements de signalisation et des éléments reliant le châssis (11), et
un bus de données connectant le châssis (11), les modules (12, 13) et la coque (14),
**caractérisé en ce que**
le module de commande électronique (12) et le module de gestion de l'entraînement du transport (13) ont chacun une alimentation électrique interne, le châssis (11), le module de commande électronique (12) et la coque (14) ont une autre interface électrique,
le châssis (11) est adapté pour exercer des forces mécaniques et convertir des signaux électriques reçus du module de commande électronique (12), pour supporter la coque (14) au moyen des éléments de connexion et pour fournir au module de gestion de l'entraînement du transport (13) des informations sur l'état du véhicule,
le module de commande électronique (12) comprend des actionneurs intégrés mécaniquement au châssis (11) et est adapté pour, sous le contrôle du module de gestion de l'entraînement du transport (13) via le bus de données, commander, par exemple en freinant, en dirigeant, en suspendant ou en propulsant, le châssis (11) via les actionneurs, les forces et les signaux électriques, actionner les éléments reliant et commander la signalisation à l'intérieur du châssis (11), et
le module de gestion de l'entraînement du transport (13) est adapté pour acquérir des informations externes, telles que le type de la coque (14), des informations internes, telles que les conditions de conduite, l'état de fonctionnement, l'alimentation en énergie ou les occupants du véhicule (10), et une tâche de conduite,
calculer une trajectoire correspondant à la tâche de conduite,
gérer les commandes, les indicateurs et l'équipement de signalisation, commander, par l'intermédiaire du bus de données, la coque (14), plus particulièrement les commandes, les indicateurs, les portes, les trappes et l'air conditionné, et le module de commande électronique (12), de sorte que le véhicule (10) soit guidé le long de la trajectoire, et
signaler l'état à l'intérieur et à l'extérieur du véhicule (10).

2. Véhicule (10) selon la revendication 1 dans lequel
la coque (14) a une alimentation électrique interne.

3. Véhicule (10) selon la revendication 1 ou 2 dans lequel
la coque (14) est adaptée pour
transporter des passagers ou des marchandises
maintenir l'air conditionné,
communiquer avec les passagers ou les marchandises transportées,
intégrer les capteurs, les commandes et les indicateurs dans le module de gestion de l'entraînement du transport (13),
sous le contrôle du module de gestion de l'entraînement du transport (13), effectuer la signalisation en actionnant les portes, les trappes et l'air conditionné, et contrôler les éléments reliant.

4. Procédé de fabrication d'un véhicule (10) selon l'une quelconque des revendications précédentes,
**caractérisé par**
l'assemblage du véhicule (10) à partir d'un premier ensemble préassemblé et d'un deuxième ensemble préassemblé.

5. Procédé selon la revendication 4,
**caractérisé par**
préassemblage du coque (11) et du module de commande électronique (12) dans le premier ensemble, et
préassemblage du module de gestion de l'entraînement de transport (13) et de la coque (14) dans le deuxième ensemble.

6. Procédé selon la revendication 4,
**caractérisé par**
préassemblage du coque (11) dans le premier ensemble et
préassemblage des modules (12, 13) dans le deuxième ensemble.

7. Procédé selon la revendication 5 ou 6
dans lequel
chacun des ensembles est testé, entretenu et mis en oeuvre séparément.
